# EUROPEAN PATENT APPLICATION

(11) **EP 1 348 849 A2**
(43) Date of publication of application: **01.10.2003**
(21) Application number: 03001192.8
(22) Date of filing: 21.01.2003
(51) Int. Cl.: F02B 37/16, F02B 37/20

(54) **Engine turbocompressor controllable bypass system and method**

(30) Priority: 26.03.2002 US 106093
(71) Applicant: General Motors Corporation, Detroit, Michigan 48265-3000 (US)
(72) Inventor: Gottemoller, Paul, Palos Park, IL 60464 (US); Poola, Ramesh B., Naperville, IL 60565 (US); Corba, David, Des Plaines, IL 60016 (US); Zagone, John R., Westmont, IL 60559 (US)
(74) Representative: Manitz, Finsterwald & Partner GbR

(57) **Abstract**

A system for a turbocharged internal combustion engine includes an engine (10) having a charge inlet (14) connected to the compressor outlet (26) and an exhaust outlet (16) connected to the turbine inlet (28) for driving the turbocharger (18) with hot exhaust gas and supplying compressed air to the engine (10) for combustion. A bypass duct (44) connects the compressor outlet (26) to the turbine inlet (28) for diverting a portion of the compressed air around the engine (10) to the turbine inlet (28). A control member (50) selectively controls the diversion of air. An operating method for the system involves controlling surge in an engine turbocharger compressor by diverting a portion of compressed air to the turbine inlet (28) to limit compressor air pressure and insure sufficient air flow to avoid compressor surge. Preferably, the diverted air enters a distal part (46) of an engine exhaust header (16) for mixing with the exhaust gases prior to passing into the turbine inlet (28). Other benefits are disclosed.

## Description

### TECHNICAL FIELD

This invention relates to turbocharged internal combustion engines, such as diesel engines, and more particularly to a system and method for controlling compressor surge in the turbocharger and providing certain operational and performance advantages.

### BACKGROUND OF THE INVENTION

It is known in the art to utilize a wastegate in connection with a turbocharger compressor to bypass some of the compressor outlet air directly to the exhaust outlet of the turbocharger. The wastegate is opened when necessary to avoid compressor surge by increasing air flow through the compressor while reducing the pressure differential across the compressor. The bypass action of the wastegate also reduces air flow through the engine and therefore the cylinder charge. This has the effect of reducing peak combustion pressures and temperature resulting in reduced emissions of nitrogen oxides (NOx). The thermal load on the charge air cooler, or aftercooler, is also reduced by reducing the engine air flow by means of the wastegate. However, the bypassed air is not utilized and thus creates an energy loss in the system.

There are turbocharged diesel engine operating conditions which produce a higher cylinder trapped oxygen content than is required for efficient combustion. Typically, this results in higher NOx production because of the resulting higher peak pressure in the cylinders and increased oxygen available to combine with free nitrogen. A system and method for controlling compressor surge and further lowering controlled engine exhaust emissions is desired.

### SUMMARY OF THE INVENTION

The present invention involves taking a portion of the compressor discharge air and bypassing the charge air cooler and engine cylinders and re-injecting the compressed air prior to the turbine inlet. The bypassed air is preferably directed through the engine exhaust header or manifold, if provided. The bypass duct around the charge cooler and engine is provided with a control valve to limit air flow through the bypass to a desired value. The valve may be operated by suitable controls responsive, for example, to turbocharger compressor air flow and/or differential pressure and rotor speed to determine the proper setting of the bypass control valve.

The novel bypass system may be utilized under various engine operating conditions to prevent surge of the turbocharger compressor by increasing air flow and/or reducing differential pressure. Where the engine air charge pressure is greater than needed, the opening of the surge control bypass will result in reduced cylinder pressure as well as reduced cylinder oxygen content, both of which will result in the production of lower NOx emissions. The bypass of compressor air directly into the engine exhaust manifold will reduce manifold exhaust temperature and lower the NOx produced in the exhaust. It will also improve turbine life by reducing maximum turbine temperatures. The system additionally recovers a large percentage of the compressor discharge energy by passing the compressed air through the turbine. Further, the bypassed air provides additional oxygen to the exhaust which helps burn up any excess hydrocarbons. Additionally, the reduced air flow through the engine also reduces the cooling load on the aftercooler, providing for more efficient system operation.

These and other features and advantages of the invention will be more fully understood from the following description of certain specific embodiments of the invention taken together with the accompanying drawings.

### BRIEF DESCRIPTION OF THE DRAWINGS

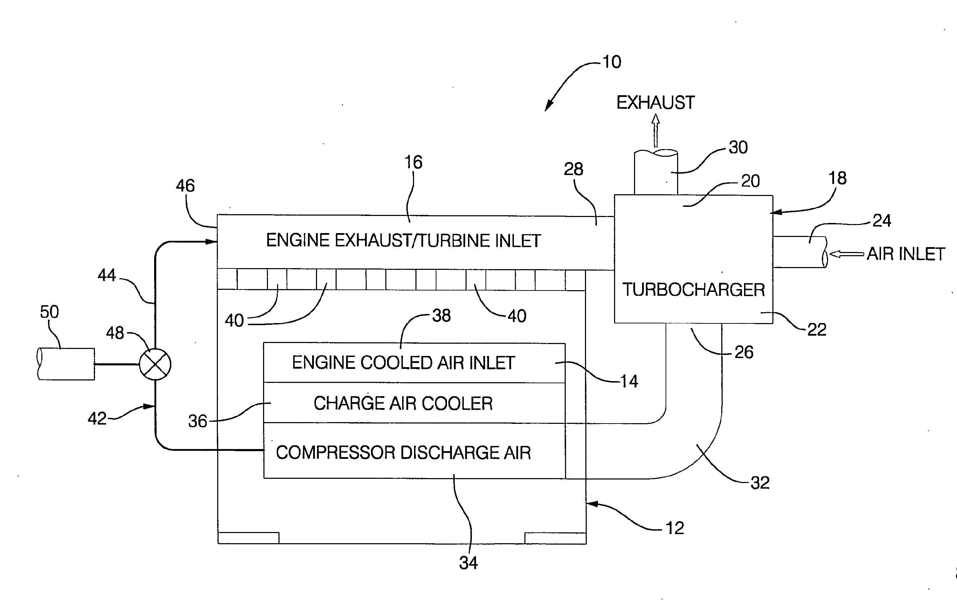

The single figure of the drawing is a schematic side view of an engine including a turbocharger and a system for controlling compressor surge in accordance with the invention.

### DESCRIPTION OF THE PREFERRED EMBODIMENT

Referring now to the drawing in detail, numeral 10 generally indicates an internal combustion engine assembly, such as a diesel engine for railroad locomotives, marine applications and other uses. Assembly 10 includes an engine 12 having a charge air inlet 14 and an exhaust outlet including an engine exhaust manifold 16. A turbocharger 18 is mounted on or adjacent to the engine and includes internally a turbine 20 driving a compressor 22.

The compressor includes an ambient air inlet 24 and a compressed air outlet 26. The turbine includes an exhaust gas inlet 28 and an exhaust discharge or outlet 30.

The compressor outlet 26 is conventionally connected through a duct 32 with an inlet header 34 for a charge air cooler 36. The air cooler 36 discharges to a manifold or header 38 which delivers cooled compressed inlet air to the engine cylinders, not shown. The engine cylinders discharge through one or more exhaust outlets 40 to the exhaust manifold 16, which carries the engine exhaust gas to the inlet 28 of the turbine for driving the turbocharger. The spent exhaust gas is discharged through the turbine exhaust 30.

In accordance with the invention, the engine assembly 10 includes and forms a part of a surge control system 42 for controlling surge in the turbocharger compressor as well as for providing other benefits. In addition to the elements described above, the surge control system 42 includes a bypass duct 44 which connects the charge air cooler inlet header 34 directly with the engine exhaust manifold 16 at an end 46 distal from the turbine exhaust gas inlet 28. The bypass duct 44 has mounted therein a bypass control valve 48 which may be operated in any suitable manner, such as by an electronic or electro-mechanical control 50. Control 50 may be actuated through suitable sensors, not shown, in response to operational data such as pressure differential, air flow and/or compressor speed. Operating conditions can be programmed to maintain the compressor in a surge-free operational condition.

In operation of the engine, especially at higher load conditions, the turbocharger speed may provide greater air pressure and flow than is needed in order to properly burn the fuel supplied to the engine. Under some conditions, the exhaust back pressure may increase excessively, limiting air flow through the compressor and approaching a condition of surge. Under such circumstances, sensed conditions within the turbocharger will actuate the control 50 to open the bypass valve 48 a controlled amount. This will allow some of the compressor discharge air to be bypassed around the charge cooler 36 and engine cylinders, not shown, directly to the engine exhaust manifold 16 at the end 46 distal from the turbine inlet 28. Bypassing of the charge cooler and engine immediately increases turbocharger airflow and reduces the differential pressure, so as to avoid compressor surge. Air flow through the charge air cooler and engine cylinders is also reduced so that the thermal load on the charge cooler is lowered. Also, air trapped in the engine cylinders is reduced so that oxides of nitrogen production in the cylinders is lowered because of the reduced temperatures and excess air present. At the same time, the air bypassed through the bypass duct 44 passes through the exhaust manifold 16 where it mixes with the engine exhaust gases, and its oxygen content assists in burning up excess hydrocarbons in the exhaust. Additionally, the energy of the bypassed compressor air adds to the exhaust energy upon entering the turbine 20 of the turbocharger so that the energy is used in maintaining the turbocharger speed prior to discharging to atmosphere with the other exhaust gases through the turbine exhaust discharge 30. The reduction in cylinder pressure in the engine because of the lower exhaust charges also helps reduce NOx formed during combustion in the cylinders.

Considered as a method, the present invention involves controlling surge in an engine turbocharger compressor by diverting a sufficient portion of the compressed air from the compressor outlet around the engine to the turbine inlet to limit compressor air pressure and insure sufficient airflow to avoid compressor air surge conditions. The method may also include passing the diverted air through the engine exhaust header or manifold for mixing with the exhaust gases prior to passing into the turbine inlet. Excess oxygen in the diverted air is then available for burning hydrocarbons present in the engine exhaust manifold. The method may also include operating the control valve in the bypass duct to reduce engine cylinder pressures and temperatures. It can also control air flow thorough the charge air cooler to obtain reductions in engine created NOx and to lower the cooling load in the charge air cooler where such operation may prove of benefit in conserving energy or controlling emissions.

While the invention has been described by reference to certain preferred embodiments, it should be understood that numerous changes could be made within the spirit and scope of the inventive concepts described. Accordingly, it is intended that the invention not be limited to the disclosed embodiments, but that it have the full scope permitted by the language of the following claims.

## Claims

1. A controllable bypass system for a turbocharged internal combustion engine, the system comprising:
an engine having a charge inlet and an exhaust outlet;
a turbocharger including a turbine driving a compressor, a turbine inlet connected to the engine exhaust outlet for driving the turbine with hot exhaust gas and a compressor outlet connected to the engine charge inlet for supplying compressed air to the engine for combustion;
a bypass duct connecting the compressor outlet to the turbine inlet for diverting a portion of the compressed air around the engine from the compressor outlet to the turbine inlet; and
a control member for selectively controlling the diversion of air through the bypass duct.

2. A system as in claim 1 wherein the control member is a control valve in the duct and is externally operable for controlling bypass air flow.

3. A system as in claim 2 wherein the control valve is operated by a controller responsive to air flow and pressure differential across the compressor to provide bypass air flow as required to avoid surge in the compressor air flow.

4. A system as in claim 1 including a charge air cooler in the engine charge inlet for cooling the compressed air prior to combustion in the engine.

5. A system as in claim 1 wherein the engine includes an exhaust manifold forming part of the engine exhaust outlet and the bypass duct is connected to the exhaust manifold at an end distal from the turbine inlet

6. A method of controlling surge in an engine turbocharger compressor, the method comprising:
diverting a sufficient portion of the compressed air from the compressor outlet around the engine to the turbine inlet to limit compressor air pressure and insure sufficient air flow to avoid compressor surge conditions while utilizing the energy in the diverted air to maintain compressor speed.

7. A method as in claim 6 including passing the diverted air through an engine exhaust header for mixing with the exhaust gases prior to passing into the turbine inlet.

8. A method of controlling NOx production in an engine having a turbocharger, the method comprising:
diverting a controlled portion of compressed air from the compressor outlet around the engine to the turbine inlet to limit oxygen content in the cylinders and thereby reduce NOx production in the cylinders while utilizing the energy in the diverted air to maintain compressor speed.

9. A method as in claim 8 including passing the diverted air through an engine exhaust header for mixing with the exhaust gases prior to passing into the turbine inlet.

10. A method of controlling peak cylinder pressure in an engine having a turbocharger, the method comprising:
diverting a portion of the compressed air from the compressor outlet around the engine to the turbine inlet to limit oxygen content in the cylinders and reduce the combustion rate, thereby limiting peak pressures in the engine cylinders while utilizing the energy in the diverted air to maintain compressor speed.

11. A method as in claim 10 including passing the diverted air through an engine exhaust header for mixing with the exhaust gases prior to passing into the turbine inlet.
